(19) Europäisches Patentamt
European Patent Office
Office européen des brevets

(11) **EP 2 758 915 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
*G06K 9/32* *(2006.01)*     *G06K 9/62* *(2006.01)*
*G06K 9/00* *(2006.01)*

(21) Anmeldenummer: **12783084.2**

(22) Anmeldetag: **16.08.2012**

(86) Internationale Anmeldenummer:
**PCT/DE2012/000855**

(87) Internationale Veröffentlichungsnummer:
**WO 2013/037344 (21.03.2013 Gazette 2013/12)**

(54) **VERFAHREN ZUR AUTOMATISIERTEN ECHTZEIT-ERFASSUNG VON MARINEN SÄUGERN**

METHOD FOR AUTOMATIC REAL-TIME MONITORING OF MARINE MAMMALS

PROCÉDÉ DE DÉTECTION TEMPS RÉEL AUTOMATISÉE DE MAMMIFÈRES MARINS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2011 DE 102011114084
19.09.2011 US 201161536131 P**

(43) Veröffentlichungstag der Anmeldung:
**30.07.2014 Patentblatt 2014/31**

(73) Patentinhaber: **Alfred-Wegener-Institut Helmholtz-Zentrum für Polar- und Meeresforschung
27570 Bremerhaven (DE)**

(72) Erfinder:
• **PARANHOS ZITTERBART, Daniel**
**91083 Baiersdorf (DE)**
• **KINDERMANN, Lars**
**27576 Bremerhaven (DE)**
• **BOEBEL, Olaf**
**27628 Bramstedt (DE)**

(56) Entgegenhaltungen:
• **Daniel Zitterbart ET AL: "MAPS: an Automated Whale Detection System for Mitigation Purposes", SEG San Antonio 2011 Annual Meeting, 1. August 2011 (2011-08-01), XP055049861, Gefunden im Internet: URL:http:// library.seg.org/doi/pdf/10.1190 /1.3628169 [gefunden am 2013-01-16]**
• **Joseph Graber: "Land-based Infrared Imagery for Marine Mammal Detection", Master Thesis, Univ. Washington, 27. Juni 2011 (2011-06-27), XP055049894, Gefunden im Internet: URL:http:// depts.washington.edu/nnmrec/doc s/ 20110322_GraberJ_thesis_IRWhales.pdf [gefunden am 2013-01-16]**
• **Varun Santhaseelan ET AL: "Neural Network Based Methodology for Automatic Detection of Whale Blows in Infrared Video" In: "Field Programmable Logic and Application", 1. Januar 2012 (2012-01-01), Springer Berlin Heidelberg, Berlin, Heidelberg, XP055049929, ISSN: 0302-9743 ISBN: 978-3-54-045234-8 Bd. 7431, Seiten 230-240, DOI: 10.1007/978-3-642-33179-4_23, das ganze Dokument**
• **Joe Wong ET AL: "Automatic time-picking of first arrivals on noisy microseismic data", , 1. Januar 2009 (2009-01-01), XP055049997, Gefunden im Internet: URL:http://www.crewes.org/ ForOurSponsors/C onferenceAbstracts/ 2009/CSEG/Wong_CSEG_200 9.pdf [gefunden am 2013-01-16]**

## Beschreibung

Die Erfindung bezieht sich auf ein Verfahren zur automatisierten Echtzeit-Erfassung von marinen Säugern in natürlichen Gewässern in der Umgebung eines Schiffs durch Detektion von thermischen Signaturen der marinen Säuger mittels bildgebendem thermographischem Scannen der Gewässeroberfläche mit einem Infrarotkamerasystem, das der Erzeugung eines Bilddatenstroms von aufeinanderfolgenden Bildern dient, wobei jedes Bild in einzelne Pixel aufgeteilt ist, und anschließender modularer Prozessierung des Bilddatenstroms in einem Computer mit zumindest den aufeinanderfolgenden, in einzelnen Computerkomponenten implementierten Teilprozessen:

- Bildvorverarbeitung jedes Bilds,
- Detektion von lokalen Kontraständerungen im Bild und
- Klassifikation der detektierten lokalen Kontraständerungen zur Erkennung der thermischen Signatur eines marinen Säugers.

Zu den marinen Säugern ("Marine Mammal", Meeressäuger) werden alle Säugetiere gezählt, die sich wieder an ein Leben im Meer angepasst haben, insbesondere auch alle Arten von Walen und Robben. Dabei sind gerade die Wale in höchstem Maße vom Aussterben bedroht. Neben einer direkten optischen Erkennung sind solche marinen Säuger vor allem auch an ihren thermischen, d.h. durch Wärme erzeugten Signaturen, wie insbesondere auftauchende Körperteile, wie Flossen und Fluken, Walblas (aus dem Atemloch ausgestoßene körperwarme Atemluft) und so genannte "Footprints", d.h. Verwirbelungen des Wassers in der Spur des Tieres). Aufgrund zunehmender Bedenken hinsichtlich der Auswirkungen anthropogener, Unterwasserschall erzeugender Arbeiten (wie z.B. Rammarbeiten für Windparks oder hydroakustischer Untersuchungen der Öl- und Gasindustrie) auf marine Säuger wird z.B. für seismisch- geophysikalische Untersuchungen innerhalb der EEZ (Exclusive Economic Zone) der USA und GB gefordert, Seismik-Kanonen ("Airguns") bei der Präsenz von marinen Säugern in einem Umkreis von typischerweise 1 km bis 3 km, dem so genannten "Mitigationsradius", abzuschalten. Vor Beginn des Einsatzes der Airguns wird darüberhinaus ein säugerfreier Beobachtungszeitraum von 30 min gefordert. Ob sich marine Säuger innerhalb des Mitigationsradius befinden oder Gefahr laufen hineinzugeraten, wird derzeit in der Regel tagsüber durch visuelle Beobachtungen von bis zu drei zeitgleich operierenden Beobachtern festgestellt. Nachts oder bei schlechten Sichtverhältnissen (Sichtweite, Spiegelungen, Lichtverhältnisse) oder Wetterverhältnissen (Wind, Nebel, Seegang) lässt sich eine visuelle Beobachtung jedoch nicht realisieren. Auch bei ausreichenden Sichtverhältnissen erfordern die sich üblicherweise über einen längeren Zeitraum erstreckenden visuellen Beobachtungen über den gesamten Horizont höchste Konzentration der Beobachter, da die zu erkennende thermische Signatur des marinen Säugers vor dem oft sehr variablen Hintergrund der Wellen meist für nur wenige Sekunden sichtbar ist. Aufgrund von schnell einsetzender Ermüdung kann daher jeder Beobachter nur eine relativ kurze Zeit zur Beobachtung eingesetzt werden. Zunehmend wird daher versucht, automatische Systeme mit Kameras und automatischer Auswertung der aufgezeichneten Bilder einzusetzen. Bisherige Versuche konzentrieren sich dabei vornehmlich auf thermographische Verfahren, bei denen Infrarotkameras als Bildquelle zum Einsatz kommen.

## Stand der Technik

Im Nachfolgenden werden zunächst einige grundlegende Definitionen verwendeter Fachbegriffe aufgeführt, wie sie dem Fachmann vertraut sind.

Eine Klassifikation, Typifikation oder Systematik ist eine planmäßige Sammlung von abstrakten Klassen (auch Konzepten, Typen oder Kategorien), die zur Abgrenzung und Ordnung verwendet werden. Die einzelnen Klassen werden in der Regel mittels Klassifizierung, das heißt durch die Einteilungen von Objekten anhand bestimmter Merkmale, gewonnen und hierarchisch angeordnet. Die Menge der Klassennamen bilden ein kontrolliertes Vokabular. Die Anwendung einer Klassifikation auf ein Objekt durch Auswahl einer passenden Klasse der gegebenen Klassifikation heißt Klassierung.

Verifizierung oder Verifikation ist der Nachweis, dass ein vermuteter oder behaupteter Sachverhalt wahr ist. Der Begriff wird unterschiedlich gebraucht, je nachdem, ob man sich bei der Wahrheitsfindung nur auf einen geführten Beweis stützen mag oder aber auch die in der Praxis leichter realisierbare bestätigende Überprüfung und Beglaubigung des Sachverhaltes durch Argumente einer unabhängigen Instanz als Verifizierung betrachtet (vergleiche Wikipedia; Stichwort "Verifikation"), was im vorliegenden Fall gegeben ist.

Überwachtes Lernen ist ein Teilgebiet des maschinellen Lernens. Mit Lernen ist dabei die Fähigkeit gemeint, Gesetzmäßigkeiten nachzubilden. Die Ergebnisse sind durch Naturgesetze oder Expertenwissen bekannt und werden benutzt, um das System anzulernen. Ein Lernalgorithmus versucht, eine Hypothese zu finden, die möglichst zielsichere Voraussagen trifft, Unter Hypothese ist dabei eine Abbildung zu verstehen, die jedem Eingabewert den vermuteten Ausgabewert zuordnet. Dazu verändert der Algorithmus die freien Parameter der gewählten Hypothesenklasse. Die Methode richtet sich nach einer im Vorhinein festgelegten zu lernenden Ausgabe, deren Ergebnisse bekannt sind. Die Ergebnisse des Lernprozesses können mit den bekannten, richtigen Ergebnissen verglichen, also "überwacht", werden. Nach einem Training bzw. Lernprozess sollte das System in der Lage sein, zu einer unbekannten, den gelernten Beispielen ähnlichen Eingabe eine korrekte Ausgabe zu liefern. Um diese Fähigkeit zu testen, wird das System validiert. Eine Möglichkeit ist, die verfügbaren Daten in ein Trainingsset und ein Testset zu unterteilen. Das Ziel ist es, das Fehlermaß im Testset, mit dem nicht trainiert wird, zu minimieren. Häufig kommen dafür Kreuzvalidierungsverfahren zur Anwendung.

Eine Support Vector Machine (SVM, die Übersetzung aus dem Englischen, Stützvektormaschine oder Stützvektormethode, ist nicht gebräuchlich) ist ein Klassifikator und unterteilt eine Menge von Objekten so in Klassen, dass um die Klassengrenzen herum ein möglichst breiter Bereich frei von Objekten bleibt. Die Stützvektormethöde ist ein rein mathematisches Verfahren der Mustererkennung, das in Computerprogrammen umgesetzt wird. Ausgangsbasis für den Bau einer Support Vector Machine ist eine Menge von Trainingsobjekten (Tainingsdatensätzen), für die jeweils bekannt ist, welcher Klasse sie zugehören. Jedes Objekt (jeden Datensatz) wird durch einen Vektor in einem Vektorraum repräsentiert. Aufgabe der Support Vector Machine ist es, in diesen Raum eine Hyperebene einzupassen, die als Trennfläche fungiert und die Trainingsobjekte in zwei Klassen teilt. Der Abstand derjenigen Vektoren, die der Hyperebene am nächsten liegen, wird dabei maximiert. Dieser breite, leere Rand soll später dafür sorgen, dass auch Objekte, die nicht genau den Trainingsobjekten entsprechen, möglichst zuverlässig klassifiziert werden. Beim Einsetzen der Hyperebene ist es nicht notwendig, alle Trainingsvektoren zu beachten. Vektoren, die weiter von der Hyperebene entfernt liegen und gewissermaßen hinter einer Front anderer Vektoren "versteckt" sind, beeinflussen Lage und Position der Trennebene nicht. Die Hyperebene ist nur von den ihr am nächsten liegenden Vektoren abhängig - und auch nur diese werden benötigt, um die Ebene mathematisch exakt zu beschreiben. Diese nächstliegenden Vektoren werden nach ihrer Funktion Stützvektoren (engl. Support Vectors) genannt und verhalfen den Support Vector Machines zu ihrem Namen. Eine Hyperebene kann nicht "verbogen" werden, so dass eine saubere Trennung mit einer Hyperebene nur dann möglich ist, wenn die Objekte linear trennbar sind. Dies ist in realen Anwendungsfällen im Allgemeinen nicht der Fall. Support Vector Machines verwenden im Fall nicht linear trennbarer Daten den Kernel-Trick, um eine nicht lineare Klassengrenze einzuziehen. Die Idee hinter dem Kernel-Trick ist, den Vektorraum und damit auch die darin. befindlichen Trainingsvektoren in einen höherdimensionalen Raum zu überführen. In einem Raum mit genügend hoher Dimensionsanzahl - im Zweifelsfall unendlich - wird auch die verschachteltste Vektormenge linear trennbar. In diesem höherdimensionalen Raum wird nun die trennende Hyperebene bestimmt. Bei der Rücktransformation in den niedrigerdimensionalen Raum wird die lineare Hyperebene zu einer nicht linearen, unter Umständen sogar nicht zusammenhängenden Hyperfläche, die die Trainingsvektoren sauber in zwei Klassen trennt (vergleiche C.-C. Chang und C.-J. Lin: "LIBSVM: A Library for Support Vector Machines", Download http://citeseerx.ist.psu.edu/viewdoc/summary?doi=10.1.1.66.2871 ; Quelle http://www.csie.ntu.edu.tw/~cjlin/papers/libsvm.pdf Archiv CiteSeerX - Scientific Literature Digital Library and Search Engine (United States), Stand 20.05.2011).

Die Hauptkomponentenanalyse (Principal Component Analysis PCA) wird spezielle in der Bildverarbeitung eingesetzt und ist ein Verfahren der multivariaten Statistik. Sie dient dazu, umfangreiche Datensätze zu strukturieren, zu vereinfachen und zu veranschaulichen, indem eine Vielzahl statistischer Variablen durch eine geringere Zahl möglichst aussagekräftiger Linearkombinationen (die "Hauptkomponenten") genähert wird. Der zugrunde liegende Datensatz hat typischerweise die Struktur einer Matrix aus Gegenständen und deren Merkmale. Ein solcher Datensatz kann als Menge von n Punkten im p-dimensionalen Raum veranschaulicht werden. Ziel der Hauptkomponentenanalyse ist es, diese Datenpunkte so in einen q-dimensionalen Unterraum zu projizieren, dass dabei möglichst wenig Information verloren geht und vorliegende Redundanz in Form von Korrelation in den Datenpunkten zusammengefasst wird. Mathematisch wird eine Hauptachsentransformation durchgeführt. Die Hauptkomponentenanalyse ist problemabhängig, weil für jeden Datensatz eine eigene Transformationsmatrix berechnet werden muss. Die Rotation des Koordinatensystems wird so ausgeführt, dass die Kovarianzmatrix diagonalisiert wird, d. h. die Daten werden dekorreliert (die Korrelationen sind die Nicht-diagonal-Einträge der Kovarianzmatrix). Für normalverteilte Datensätze bedeutet dies, dass die einzelnen Komponenten jedes Datensatzes nach der PCA voneinander statistisch unabhängig sind, da die Normalverteilung durch das nullte (Normierung), erste (Mittelwert) und zweite Moment (Kovarianzen) vollständig charakterisiert wird. Sind die Datensätze nicht normalverteilt, dann werden die Daten auch nach der PCA - obwohl nun dekorreliert - noch immer statistisch abhängig sein. Die PCA ist also insbesondere für normalverteilte Datensätze eine optimale Methode.

Bei der Grenzwert-Methode (First Break Picking) werden gezielt Daten ausgewählt, die ober- oder unterhalb eines vorgegebenen Grenzwert (Schwellwerts) liegen. Bei der STA/LTA-Quotienten-Methode wird aus unterschiedlichen Mittelwerten eines für das jeweilige Probleme signifikanten Parameters ein Quotient gebildet und in Relation zu einem vorgegebenen, ggfs. zeit- und fallabhängig veränderlichen Grenzwert in Relation gesetzt. Die Anwendung des Grenzwert-Algorithmus ist insbesondere aus der Seismologie bekannt (vergleiche "Automatic time-picking of first arrivals on noisy microseismic data" von J. Wong et al., Conference Abstract Canadian Society of Exploration Geophysicists CSEG Microseismic Workshop 2009; "Automatic time-picking of Microseismic Data Combining STA/LTA and the Stationary Discrete Wavelet Transform" von I. R. Rodriguez, 2011 CSPG CSEG CWLS Convention))

Der der Erfindung nächstliegende Stand der Technik mit einer Beschreibung des eingangs dargestellten gattungsgemäßen Verfahrens, von dem die Erfindung ausgeht, wird offenbart in der durch die Erfinder der vorliegenden Erfindung initiierte und betreute Diplomarbeit "Hast Du's auf'm Schirm? Entwurf und Implementierung eines stabilen multifunktionalen Mehrkamera-Outdoor-Echtzeitsystems zur automatischen Objektdetektion im Infrarotbereich" (Marc Ritter, 19. März 2007, Technische Universität Chemnitz, Diplomarbeit zitiert in "Entwurf eine Echtzeit-Bildverarbeitungssystem zur automatischen Erkennung von Walen im Umfeld der Antarktis" von Marc Ritter in "15 Jahre Künstliche Intelligenz an der TU Chemnitz" CSR-08-01, April 2008, Seiten 231 bis 250).

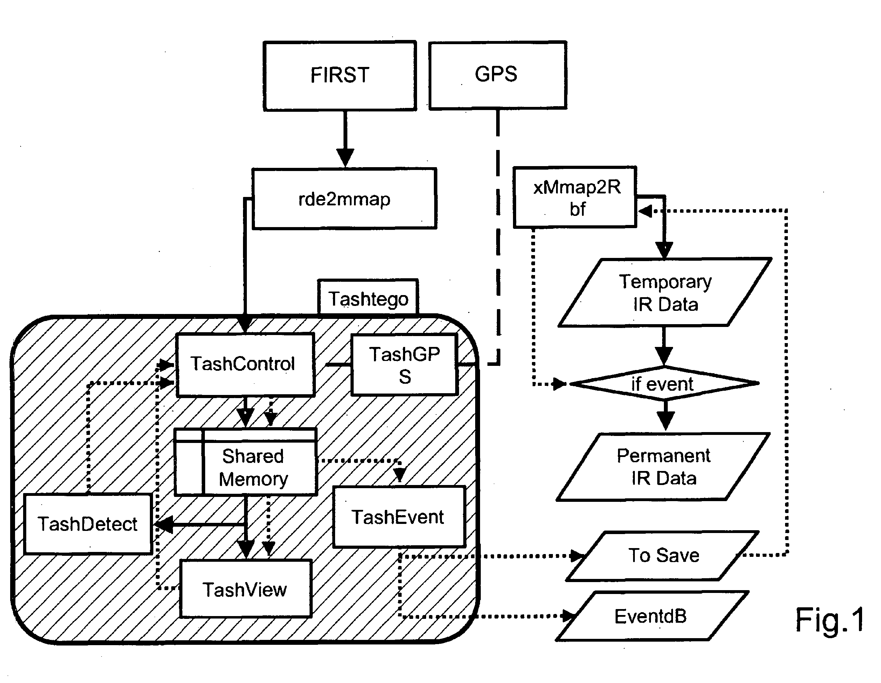

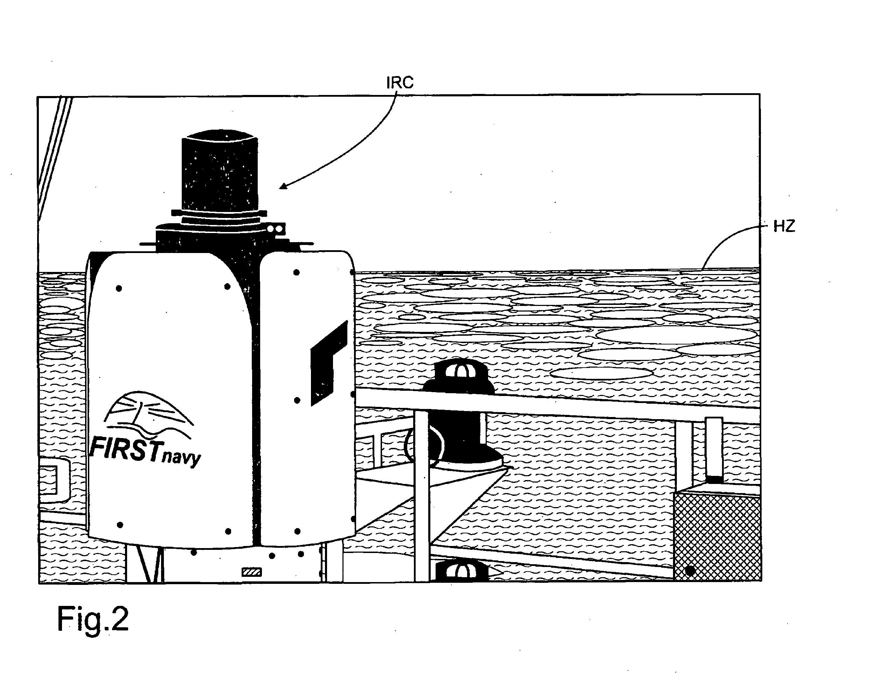

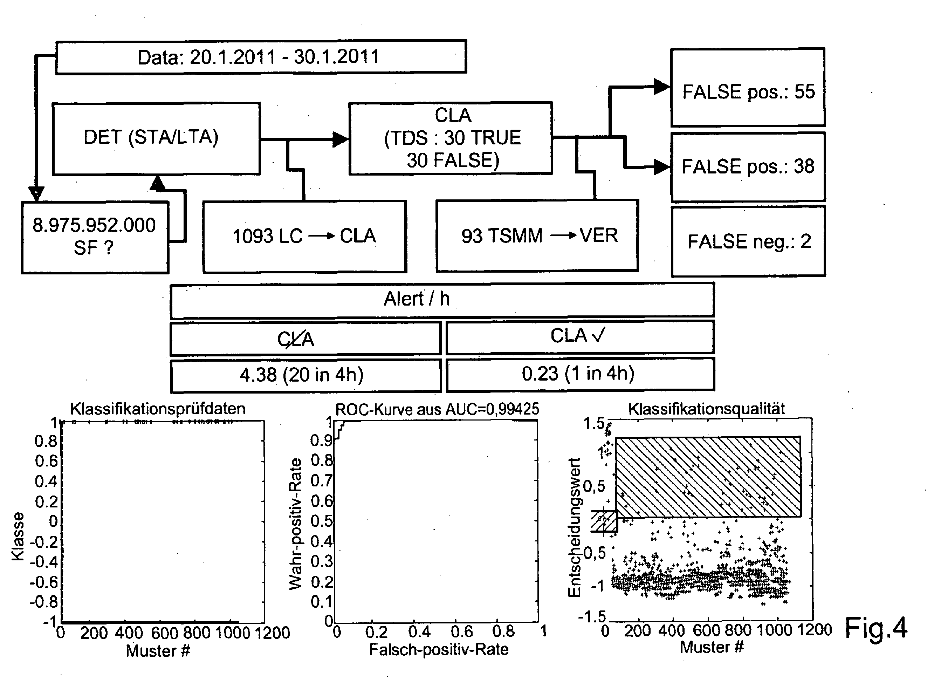

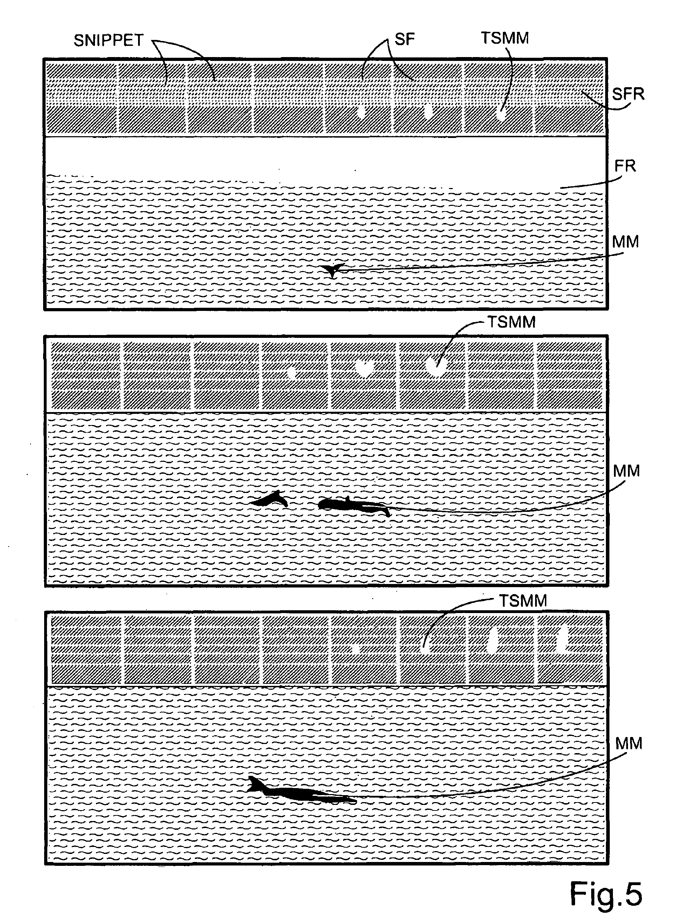

Für den Scan der Gewässeroberfläche wurden in der Diplomarbeit stationär eine visuelle Kamera mit einem Erfassungswinkel von 24° und zwei Infrarotkameras mit einem Erfassungswinkel von 12° bzw. 7° als Infrarotkamerasystem eingesetzt (vergleiche Seite 9, Abb. 1.5 der Diplomarbeit). Die grundlegende modulare Pipeline-Prozessierung wird auf Seite 62, Abb. 5.1 und die zugehörige Modulhierarchie wird auf Seite 47, Abbildung 4.2. der Diplomarbeit gezeigt. In der gesamten Prozessierung stellt bereits die Bildvorverarbeitung einen integralen Bestandteil des gesamten Erkennungsprozesses dar (vergleiche Seite 24, Abb. 2.2 der Diplomarbeit). In der Bildvorverarbeitung werden die Bilddaten in einem Ringpuffer nach dem FIFO-Prinzip (First In - First Out) abgespeichert (vergleiche Seite 53, Kap. 4.3.1. der Diplomarbeit). Bei der Bildsegmentierung wird das Bild in gewichtete Bildteile aufgeteilt, indem zum einen homogene Segmentierungsobjekte mit gleichartiger Charakteristik, zum anderen Objektgrenzen aufgefunden werden. Bei einer derart gewichteten Segmentierung können aber bereits relevante Signale verloren gehen. Bereits in der Bildvorverarbeitung wird durch Einsatz mehrerer Gauß-Filter und empirisch festgelegter Wichtungswerte versucht, das Signalzu-Rausch-Verhältnis zu verbessern (vergleiche Seite 68, Tab. 5.1 der Diplomarbeit). Durch Filterung können jedoch ebenfalls relevante Signale verloren gehen. Durch die empirische Festlegung von Faktoren können zudem zur späteren Klassifikation notwendige Daten übergangen werden. In der Detektion wird ein Sobel-Filter zweifach auf das signalverstärkte Bild angewendet. Hierbei werden nur die Punkte höchster Intensität (also höchster Kantensteilheit) betrachtet und zur Klassifikation herangezogen. Der lokale Kontrast bleibt außer Betracht. Die Klassifikation besteht aus einer Überprüfung, ob fünfmal (ebenfalls rein empirisch festgelegter Wert) nacheinander an derselben Stelle im Bild die höchste Kantensteilheit festgestellt wurde. Eine Optimierung im Sinne einer Anpassung an aktuelle Randbedingungen (geänderte Umweltbedingungen) erfolgt nicht.

Die Verifikation, Lokalisation und Dokumentation sind nicht grundlegende Bestandteile des bekannten Prozessierungsverfahrens. Sie finden in der Diplomarbeit nur am Rande Erwähnung. Für die Verifikation wird lediglich vermerkt, dass abgespeicherte Daten über eine Wiedergabefunktion erneut abgerufen werden können (vergleiche Seite 52, Kap. 4.2.3 der Diplomarbeit). In der Lokalisation (Lokalisierung) im Sinne einer Ortsbestimmung können globale Positionsdaten (GPS) integriert werden (vergleiche Seite 54, Kapitel 4.3.2 der Diplomarbeit). Für die Dokumentation im Sinne einer Nutzbarmachung von Informationen zur weiteren Verwendung wird eine Abspeicherung auf langlebigen Datenträgern (vergleiche Seite 77 der Diplomarbeit, Mitte) und eine chronologische Auflistung auf einer Website (vergleiche Seite 80 der Diplomarbeit, oben) erwähnt.

Weiterhin ist aus "MAPS: an Automated Whale Detection System for Mitigation Purposes" (von D.P. Zitterbart et al., SEG (Society of Exploration Geophysicists) Expanded Abstracts 30, 67 (2011) zu International Exhibition and 81st Annual Meeting, San Antonio, USA, 18.-23.09.2011; Erstveröffentlichung im Internet 01.08.2011; doi:10.1190/1.3628169,) einzelne Aspekte des in dieser Patentanmeldung erstmalig umfassend beschriebenen Systems bekannt, dass zur Walbeobachtung eine Infrarotkamera (FIRST-Navy) einsetzt, die am Mast eines Forschungsschiffs befestigt ist. Die InfrarotKamera kann einen quasi-Vollkreis (300°) rund um das Schiff beobachten, erstellt graustufige Bilder und ist gyroskopisch gegenüber Schiffsbewegungen kompensiert. Weiterhin wird eine grafische Benutzeroberfläche (Tashtego Desktop, wobei Tashtego eine vom Alfred-Wegener-Institut entwickelte Software ist) gezeigt, die das aktuelle Video und die zehn zuvor aufgenommenen Videosequenzen anzeigt. Ebenfalls werden ein vergrößerter Bildausschnitt und eine Aufnahmeschleife des letzten detektierten Walblas angezeigt. In das aktuelle Bild sind Orientierungslinien für den Horizont und verschiedene Radien angezeigt. Weiterhin werden Bilder mit integrierten Zooms, Abstandsdaten und Wassertemperaturen und mit schiffs- sowie georeferenzierten kartografischen Aufzeichnungen detektierte Walblase aufgezeigt. Weiterhin wird ausgeführt, dass die Prozessierung eine Detektion, Verifikation, Lokalisation und Dokumentation umfasst. Über die eigentliche Prozessierung der Bilddaten wird aber keine Aussage gemacht, die über diejenigen aus der oben zitierten Diplomarbeit von Marc Ritter hinausgehen.

Weiterhin ist aus der US 2010/0046326 A1 ein Verfahren zur Detektion von Walen bekannt, das aber auf einem akustischen Prinzip mit vom Wal erzeugten Tönen und vom Wal reflektierten fremd erzeugten Tönen beruht.

Darüberhinaus wurden Infrarotkameras flugzeuggestützt eingesetzt, um aus der Luft einen Zensus antarktischer Walpopulationen durchzuführen. in der Veröffentlichung "Infrared whale counting" (Keith Dartez 21.04.2009, äbrüfbar im Internet unter http://infraredinnature.blogspot.com/, Stand 18.09.2011) wird geschildert, dass der Footprint der Wale im thermographischen Bild bei vollständig ruhiger See erkennbar ist. Allerdings wird kein Automatismus zur Erkennung dieser Signaturen beschrieben, wie auch eine flugzeuggestützte Beobachtung für den dort beschriebenen Fall der Mitigation lärmerzeugender anthropogener Arbeiten logistisch nicht umsetzbar ist, da Flugzeuge nicht ununterbrochen für mehrere Monate das Umfeld eines Schiffes oder einer Plattform überwachen können.

## Aufgabenstellung

Da Sichtungen innerhalb des Mitigationsradius zu einer kostenintensiven (bis zu mehreren 100,000.- € pro Tag) Abschaltung oder Verzögerung der seismischen Untersuchungen führen, besteht ein Interessenkonflikt zwischen den Interessen des Tier- bzw. Artenschutzes und den daraus sich ableitenden Mitigationsauflagen sowie dem Explorationsauftrag der Betreiberfirma des Seismikschiffes. Aus diesem Grund ist zusätzlich zu einer tageszeitunabhängigen, möglichst objektiven Erfassung auftauchender Tiere eine sofortige Verifizierung dieser Beobachtungen wünschenswert. Darüberhinaus ist für die Entscheidung innerhalb oder außerhalb des Mitigationsradius eine Lokalisation relativ zum Schiff und georeferenziert notwendig. Um Genehmigungsbehörden nachträglich die Einhaltung der Mitigationsauflagen (inkl. vorgeschriebenem Berichtswesen) nachweisen zu können, ist weiterhin eine Dokumentation aller Sichtungen und des Arbeitsaufwandes der Sichtungsbemühungen (Effort) anzustreben. Aus diesen Gründen ist eine automatisierte, georeferenzierte Detektion mariner Säuger wünschenswert, die reproduzierbare und instantan verifizierbare Erfassungen bereitstellt und diese automatisch dokumentiert.

Im Einzelnen ist es daher **Aufgabe** der vorliegenden Erfindung, das bekannte gattungsgemäße Verfahren so weiterzubilden, dass

- im Teilprozess "Bildvorbearbeitung" die vom Bildsensor ausgegebenen Bildvektoren (UDP-Pakete) auf die individuelle Pixelempfindlichkeit hin korrigiert und in einer Bildmatrix angeordnet (Bild/Frame) werden, innerhalb derer die Vorausrichtung und Horizontkurve bestimmt und für die weitere Analyse abgelegt wird,
- im Teilprozess "Detektion" eine automatische Erkennung von lokalen Kontraständerungen in 360° Videoströmen bei unterschiedlichen Belichtungs- und Umweltbedingungen in Entfernungen bis zu mehreren Kilometern und im
- im Teilprozess "Klassifikation" eine instantane Überprüfung von detektierten lokalen Kontraständerungen auf ihre mögliche Assoziation mit thermischen Signaturen mariner Säuger (Walblas, Körperwärme oder "Footprint")

möglich ist.

Dabei soll das anzugebende Verfahren in Echtzeit zuverlässige Ergebnisse liefern und dabei für den Anwender trotzdem möglichst einfach und komfortabel bedienbar sein, eine der Grundvoraussetzungen für die Akzeptanz des Verfahrens beim Nutzer. Die Lösung für diese Aufgaben ist dem Hauptanspruch zu entnehmen. Vorteilhafte Weiterbildungen werden in den Unteransprüchen aufgezeigt, die im Folgenden im Zusammenhang mit der Erfindung näher erläutert werden.

Bei dem Verfahren nach der Erfindung wird in der Bildvorverarbeitung zur Erstellung von Einzelbildern, d.h. den einzelnen Frames, zunächst eine Korrektur der individuellen Pixelempfindlichkeit durchgeführt, sowie die Vorausrichtung innerhalb des Bildes (Bildorientierung) ermittelt. Weiter wird die aufgrund von dynamischen Restfehlern in der senkrechten Ausrichtung des bildgebenden Sensors möglicherweise wandernde Horizontlinie ermittelt und für die Teilprozess "Lokalisation" gespeichert. Darauf wird der Videostrom in Kacheln mit bekannter Bildposition segmentiert, die - über wenige aufeinanderfolgende Bilder hinweg - die so genannten (Video-) "Snippets" bilden (kurze Videoausschnitte eines kleinen Bildausschnittes). In der Bildvorverarbeitung werden keine Wichtung und keine Filterung bei der Auswahl der Snippets vorgenommen, durch die interessante Signale verloren gehen könnten. Vielmehr wird jedes einzelne Bild in zahlreiche, geeignet angeordnete Kacheln eingeteilt. Durch die sich anschließende individuelle Weiterverarbeitung jedes einzelnen Snippet bis in den Teilprozess der Verifikation können auch global kontrastschwache Anomalien detektiert werden, wenn sie lokal einen erhöhten Kontrast erzeugen. Beispielsweise zeigen Walblase nahe des Horizonts lokal einen hohen Kontrast, während sie im Vollbild im Vergleich zu hell erscheinenden Wellen im vorderen Bildbereich relativ dunkel sind, global also wenig Kontrast beinhalten. Hier ist das hier beanspruchte Verfahren dem Menschen überlegen, da eine helle Fläche im Sichtbereich zu einer Verkleinerung der Pupille führt und damit benachbarte schwache lokale Kontraständerungen vor dunkleren Bereichen des Sichtfeldes weniger deutlich oder gar nicht wahrgenommen werden.

Bevorzugt und verteilhaft kann in der Bildsegmentierung eine Aufteilung in Snippets mit ggf. positionsabhängiger Größe (Kacheln, Subbild) und wenigen Sekunden Dauer erfolgen, wobei jedes Bild in eine Vielzahl einzelner Subbilder oder auch Kacheln (37577 Kacheln im Anwendungsbeispiel) aufgeteilt ist. Hierbei handelt es sich um eine relativ kleine (21 x 21 Pixel im Anwendungsbeispiel) und sich zu 50% überlappende Subbilder (Kacheln), die gewährleisten, dass keine Informationen verloren gehen, trotzdem aber noch eine Echtzeitbearbeitung möglich ist. Eine Videosequenz von 10 Bildern (Frames) dauert bei einer Aufnahme von beispielsweise 3 Bildern pro Sekunde ca. 3 Sekunden. Damit ist sie lang genug, um Veränderungen aufzuzeigen, aber kurz genug, um in Endlosschleifen wiederholt zu werden.

Bei dem beanspruchten Verfahren wird anschließend in der Detektion ein Grenzwert-Algorithmus auf Basis des Quotienten eines Kurzzeitmittelwertes zu einem Langzeitmittelwert unter Vorgabe eines Grenzwerts zur Erkennung der lokalen Kontraständerungen eingesetzt, wobei nur Snippets mit einer überschreitung des Grenzwerts an die Klassifikation weitergereicht werden. Die Detektion dient dazu, den aufgenommenen Videodatenstrom auf (transiente und stationäre) lokale Kontraständerungen hin zu untersuchen und Bildbereiche, die lokale Kontraständerungen aufweisen, an den Klassifikator weiterzureichen. Dies ist notwendig, da eine Klassifikation aller Bildbereiche nicht in Echtzeit durchzuführen ist. In dem Teilprozess der Detektion wird im Stand der Technik nicht auf den lokalen Kontrast eingegangen. Vielmehr ergibt sich im Stand der Technik eine Fehldetektion, sobald beispielsweise eine Welle heller als ein Walblas ist. Im Gegensatz dazu funktioniert das Verfahren nach der Erfindung über eine lokale Kontraständerung mit einem zeitlich adaptiven Grenzwert unabhängig für jedes einzelne Snippet. Dadurch wird erreicht, dass die gesamte sichtbare - optisch sich ständig verändernde - Wasseroberfläche (Nah- und Fernfeld) gleichermaßen analysiert werden kann. Der STA/LTA-Detektor achtet somit auf lokale zeitliche Änderungen der Intensität und des Kontrastes und vergleicht diese mit einem adaptiven Grenzwert, um sich automatisch auf veränderte Bildparameter einstellen zu können (z.B. Blendungen je nach Sonnenstand, Seegang). Bevorzugt und vorteilhaft wird bei dem beanspruchten Verfahren in der Detektion der STA/LTA-Algorithmus mit einem zeitlich adaptiven Grenzwert (VLTA, Schwellwert) berechnet mit

$$VLTA = \overline{\left(\frac{STA}{LTA}\right)} + \lambda * \sigma\left(\frac{STA}{LTA}\right)$$

Dabei ist STA der Kurzzeitmittelwert (beispielsweise über 2 Bilder/Frames im Anwendungsbeispiel) z.B. des lokalen Kontrastes, LTA der Langzeitmittelwert (beispielsweise über 10 Bilder/Frames im Anwendungsbeispiel) des lokalen Kontrastes, Lambda ($\lambda$) ein freier Parameter, der die Sensitivität der grafischen Benutzeroberfläche definiert. Sigma ($\sigma$) beschreibt die Standardabweichung des STA/LTA-Quotienten und der waagerechte Balken den Mittelwert, jeweils über N (beispielsweise 50 im Anwendungsbeispiel) Messwerte. Durch Anwendung eines derart berechneten VLTA kann eine zuverlässige Detektion von lokalen Kontraständerungen erreicht werden.

Bei dem Verfahren nach der Erfindung wird weiterhin in der Klassifikation ein überwachtes Lernen mithilfe der Stützvektormethode (gebräuchlicher "Support Vector Machine") mit einer durch Vorgabe von ausgewählten Trainingsdatensätzen und Parametern berechneten m-dimensionalen Hyperebene aus Entscheidungswerten zur Einteilung in zwei Klassen ober-und unterhalb der Hyperebene durchgeführt wird, wobei nur Snippets mit einer Überschreitung des Entscheidungswerts einer Klasse "Blas" zugeordnet und an die Verifikation weitergereicht werden. In der Klassifikation wird entschieden, mit welcher Wahrscheinlichkeit die zuvor detektierte lokale Kontraständerung die thermische Signatur eines marinen Säugers ist oder nicht. Es werden alle zur Klassifikation nötigen Parameter direkt aus den Daten vom Algorithmus erlernt, dabei kann die Klassifikation durch jede zusätzliche, verifizierte und automatisch oder manuell der Datenbasis hinzugefügte, thermische Signatur verbessert werden. Die zur Anwendung kommende Stützvektormethode ermöglicht anhand weniger Beispiele mit neuen Bedingungen, wie z.B. veränderte Wassertemperatur, Windgeschwindigkeiten, Lichtverhältnisse etc., die Dauer der thermischen Signatur und den lokalen Kontrast verändern, umzugehen. Der lernende Algorithmus (die "Maschine") verwendet die aus bereits vorhandenen verifizierten thermischen Signaturen grundlegenden Charakteristika und kann dadurch die lokale Kontraständerung als "thermische Signatur eines marinen Säugers" oder "keine thermische Signatur eines marinen Säugers" klassifizieren. Es werden somit festgelegte Faktoren vorgegeben, alle zur Klassifikation notwendigen Daten werden aus den Daten selber gelernt. Der Entscheidungsgrenzwert "mariner Säuger / kein-mariner Säuger" wird vollständig selbst anhand von Trainingsdaten gelernt. Daher ist der Algorithmus in der Lage, sich anhand weniger Beispieldaten schnell an neue Umweltbedingungen unter Berücksichtigung verschiedener Szenarien (z.B. Wassertemperatur, Seegang, Tierart, Eisgang) anzupassen.

Anhand folgender Parameter wird durch die SVM eine zur Klassifikation nutzbare m-dimensionale Hyperebene berechnet:

- die anhand einer Hauptkomponentenanalyse ausgewählten relevanten N Hauptkomponenten eines $p_x \cdot p_y \cdot T/\tau$ dimensionalen Snippets ($\tau$ = Framerate, z.B. 3 Bilder pro Sekunde, T = Dauer des Snippets, $p_x, p_y$ = Zahl der Pixel der x- und y-Achse der Kachel)
- lokaler Kontrast innerhalb eines Snippets
- globaler Kontrast zwischen einem Snippet und dem gesamten Bild und
- Abstand des Snippets vom Horizont

Daraus wird dann der Entscheidungswert als der Betrag des Abstandes des klassifizierten Punktes von der Hyperebene errechnet.
Weiterhin, kann bei dem Verfahren nach der Erfindung bevorzugt und vorteilhaft in einer Lokalisation eine Berechnung des Abstands der erkannten thermischen Signatur automatisch durchgeführt werden. Somit kann automatisch die Entfernung zum Tier (erkannt an seiner thermischen Signatur) bestimmt werden. Hierauf aufbauend ist es möglich, die detektierte Signatur-Position innerhalb des Bildes zu einer absoluten georeferenzierten Position der Signatur durch Verknüpfung mit georeferenzierten Metadaten (z.B. Schiffsposition und Orientierung, Kameraposition, Orientierung und Position des Horizontes im Bild) weiterzuverarbeiten. Durch georeferenzierte Lokalisation sukzessiv erkannter thermischer Signaturen ist es dann möglich, die raum-zeitliche Bewegung des Tieres zu bestimmen und eine Projektion seiner Schwimmrichtung zu erstellen. Mit deren Hilfe ist eine Vorausberechnung des Zeitpunktes des möglichen Eintritt in die Mitigationsradius oder der Kollision mit dem Schiff oder zu im Wasser befindlichen Gerätschaften möglich. Vorteilhaft und bevorzugt können dem Gesamtbild, wie auch den zur Verifikation weitergereichten Snippets, Orientierungs- und Entfernungslinien sowohl in der Bilddarstellung als auch der Kartendarstellung überlagert werden. Außerdem können weitere georeferenzierte Informationen (z.B. Schiffstrack) integriert werden. Die in der Lokalisation bewerteten Snippets können dann an die Verifikation zur instantanen Überprüfung der Entscheidung oder unmittelbar an die Dokumentation weitergereicht werden.

Weiterhin können bei dem Verfahren nach der Erfindung bevorzugt und vorteilhaft in einer Verifikation weitergereichte Snippets einer instantanen Entscheidung "wahr" oder "falsch" durch einen Operator unterzogen werden, wobei die Snippets mit den getroffenen Entscheidungen den Trainingsdatensätzen in der Klassifikation automatisch oder manuell zuführbar sind, beispielsweise durch einen einfachen Klick eines menschlichen Operators. Weiterhin können in der Verifikation bevorzugt und vorteilhaft zumindest zehn Subbilder aus mehreren weitergereichten Snippets gleichzeitig bildlich dargestellt werden. Weiterhin kann in weitergereichten Snippets der Bildbereich im Subbild mit der detektierten thermischen Signatur mit gleichen globalen Positionsdaten vergrößert bildlich dargestellt werden. Derartige Maßnahmen sind zwingend notwendig um eine manuelle Verifikation durch einen menschlichen Operator zu ermöglichen. Bei dem Operator kann es sich bevorzugt und vorteilhaft um einen Algorithmus, der eine automatische Verifikation durch Kombination mehrerer thermischen Signaturen und deren durch o.g. Verfahren ermittelten Position, sowie der Einbeziehung weiterer äußerer Parameter durchführt, oder ein Mensch, der eine manuelle Verifikation durchführt, handeln. Das beanspruchte Verfahren zur Detektion mariner Säuger kann somit sowohl automatisch als auch manuell verifiziert werden. In beiden Fällen ist es vorteilhaft, wenn bei der Übergabe eines Snippets von der Klassifikation in die Verifikation eine automatische Alarmierung des Operators erfolgt.

Weiterhin können bei dem Verfahren nach der Erfindung bevorzugt und vorteilhaft in einer Dokumentation anwenderspezifische Bilddaten von detektierten marinen Säugern zusammen mit den zugehörigen Angaben aus der Lokalisation automatisch zur Verfügung gestellt. Somit ist eine automatische Protokollierung der Sichtungen mit Bild/Videosequenz, Position, Zeit und anderer Messwerte möglich und somit Probleme der manuellen Protokollierung (Schreib/Tippfehler, Ablesefehler, fehlende Einträge durch Zeitnot) vermieden. Hierzu kann ein FIFO-Speicher mit retrospektiver Dateisicherung über "ToDo" Dateien vorgesehen sein. Weiterhin kann bevorzugt und vorteilhaft vorgesehen sein, dass in der Dokumentation die klassifizierten, verifizierten und lokalisierten Signaturen als Kartenprojektion dargestellt werden. Somit ist sowohl eine elektronische als auch eine papierne Dokumentation in einfacher Weise möglich, was insbesondere gegenüber Genehmigungsbehörden mit strengen Auflagen bei der Genehmigung und Durchführung von tiergefährdenden Versuchen von besonderer Bedeutung ist.

Das Verfahren nach der Erfindung setzt sich aus einer Anzahl von Teilprozessen zusammen, die entsprechend einfach konzipiert und implementiert werden und hierarchisch durchlaufen werden können. Bevorzugt und vorteilhaft ist ein weiterer Teilprozess in die modulare Prozessierung implementiert, der der Einpassung einer globalen sinuidalen Horizontlinie mittels automatischer oder manuell festgelegter Stützpunkte dient. Ein sinuidaler Verlauf der Horizontlinie entsteht durch eine (nur schwer erfassbare) Schrägstellung der Kameraachse. Diese wird nicht durch eine aktive gyroskopische Aufhängung zur Kompensation von Schiffsbewegungen gegenüber dem Horizont ausgeglichen, Weiterhin kann bevorzugt und vorteilhaft ein weiterer Teilprozess in die modulare Prozessierung implementiert sein, der einer Vorhersage der Schwimmrichtung der marinen Säuger anhand der raum-zeitlichen Abfolge der Detektionen dient. Dadurch kann entschieden werden, ob der detektierte marine Säuger seinen Abstand zum Schiff verringert (und damit die Belastung durch Airguns vergrößert) oder den Mitigationsradius demnächst verlässt, sodass die aktuelle Messreihe nicht unterbrochen werden muss. Analog zu einer Detektion von marinen Säugern kann auch zusätzlich noch eine Detektion von Eisbergen jeder Größe (auch Kleinsteisberge) und anderen im Gewässer treibenden Objekten durchgeführt werden. Durch entsprechende Verarbeitung des zusätzlichen Bilddatenstroms kann eine Kollisionswarnung mit dem Schiff oder zu im Gewässer befindlichen Gerätschaften in der Umgebung des Schiffs ausgelöst werden. Auch im Falle der Annäherung durch einen marinen Säuger kann vorteilhaft eine Kollisionswarnung ausgelöst werden. Weiterhin ist auch eine mögliche Fehlersuche schnell auf einen bestimmten Teilprozess reduziert. Bevorzugt und vorteilhaft können als Fehler thermische Einflüsse auf das Infrarotkamerasystem beim thermischen Scannen und Verwaschungen des Horizonts durch Korrektur der individuellen Pixelempfindlichkeit rechnerisch ausgeglichen und damit kompensiert werden.

Da eine Echtzeitverarbeitung bei der automatischen Detektion mariner Säuger im Kontext der Mitigation anthropogener Schalleinträge von besonderer Bedeutung ist, wird eine modulare Prozessierung deshalb vorteilhaft und bevorzugt in mehreren parallelen Pfaden von Computerkomponenten gleichzeitig durchgeführt. Bei den Computerkomponenten handelt es sich entsprechend um Prozessoren und Speicher. Eine Erweiterung der Leistungsfähigkeit des Verfahrens nach der Erfindung kann einfach durch Bereitstellen weiterer entsprechend konfigurierter Rechner realisiert werden.

Neben der modularen Prozessierung sind auch die gerätetechnischen Komponenten bei dem Verfahren nach der Erfindung von Bedeutung. Insbesondere ist es besonders bevorzugt und vorteilhaft, wenn das bildgebende thermographische Scannen der Gewässeroberfläche mit dem Infrarotkamerasystem mit einer einzelnen Single- oder Dualband-Infrarotkamera in einem Vollkreis (quasi-360° Videodaten) oder mit mehreren Single- oder Dualband-Infrarotkameras in je einem Teilkreis mit jeweils einer aktiven gyroskopischen Kompensation von Schiffsbewegungen gegenüber dem Horizont durchgeführt wird. Bevorzugt können beim bildgebenden Scannen der Gewässeroberfläche zumindest drei aufeinander folgende graustufige oder farbige Bilder pro Sekunde erzeugt werden. Mit einem derartigen System ist eine flächendeckende Erfassung der gesamten Oberfläche um ein Schiff, beispielsweise ein Forschungsschiff, in Verbindung mit der Erzeugung eines informationsreichen Bilddatenstroms zur sicheren Gewährleistung der Erfassung nahezu jeder thermischen Signatur und - im Falle von thermographischen IR-Daten - nachweislich bei Wassertemperaturen bis zumindest +10°C innerhalb eines spezifischen Detektionsradius gewährleistet. Weiterhin kann durch Verknüpfung des Verfahrens nach der Erfindung mit einer weiteren hochauflösenden automatisch speichernden visuellen Kamera, die anhand der Verfahrensdaten automatisch auf prognostizierte Sichtungspositionen ausgerichtet wird, auch Artbestimmungen anhand z.B. der Blasform oder der Anatomie des Tieres vorgenommen werden (retrospektive, nachweisbare Artidentifikation).

Zusammenfassend gesehen bietet das beanspruchte Verfahren nach der Erfindung in seiner gesamten Konzeptionierbarkeit damit folgende besonderen Vorteile:

•    kontinuierliche überwachung von nahezu 360° (abhängig vom Aufbauort), 24h am Tag, für mehrere Monate am Stück;
•    Unabhängigkeit von Tageslicht;
•    Reduktion des Personalbedarfs auf einen Operator;
•    Unabhängigkeit der Erfassungsrate von der subjektiven Leistungsfähigkeit menschlicher Beobachter;
•    Objektivierter Erkennungs-/Klassifikationsalgorithmus unabhängig von der Erfahrung einzelner menschlicher Beobachter
•    Möglichkeit zur unabhängigen Verifikation durch Dritte mit Hilfe eine FIFO-Puffers an Videoclips die die letzten 10 Auto-Erfassungen zeigen;
•    präzise, seegangsunabhängige automatische Lokalisation und damit Entfernungsbestimmung der Erfassungen;
•    automatisierte oder manuelle kontinuierliche Bestimmung der Vorausrichtung eines Bildes sowie Bestimmung des Verlaufs des Horizonts im Bild;
•    objektive Bestimmung des Schwimmrichtung, Geschwindigkeit und Atemfrequenz des Tieres sowie

•    die Erstellung einer Kollisionsprognose;
•    automatische Dokumentation aller Schiffs-mariner Säuger-Begegnungen zum Nachweis der Aktivitäten bei Kontrollbehörden;

Weitere Details der Erfindung werden nachfolgend im Zusammenhang mit der Beschreibung eines Ausführungsbeispiels aufgezeigt.

Ausführungsbeispiel

Ausbildungsformen des Verfahrens zur automatisierten Echtzeit-Erfassung von marinen Säugern in natürlichen Gewässern nach der Erfindung werden nachfolgend zum weiteren Verständnis der Erfindung anhand der Figuren näher erläutert. Dabei zeigt:

Figur 1    die Aufbaulogik der Software Tashtego,
Figur 2    infrarotkamera an Bord eines Schiffs,

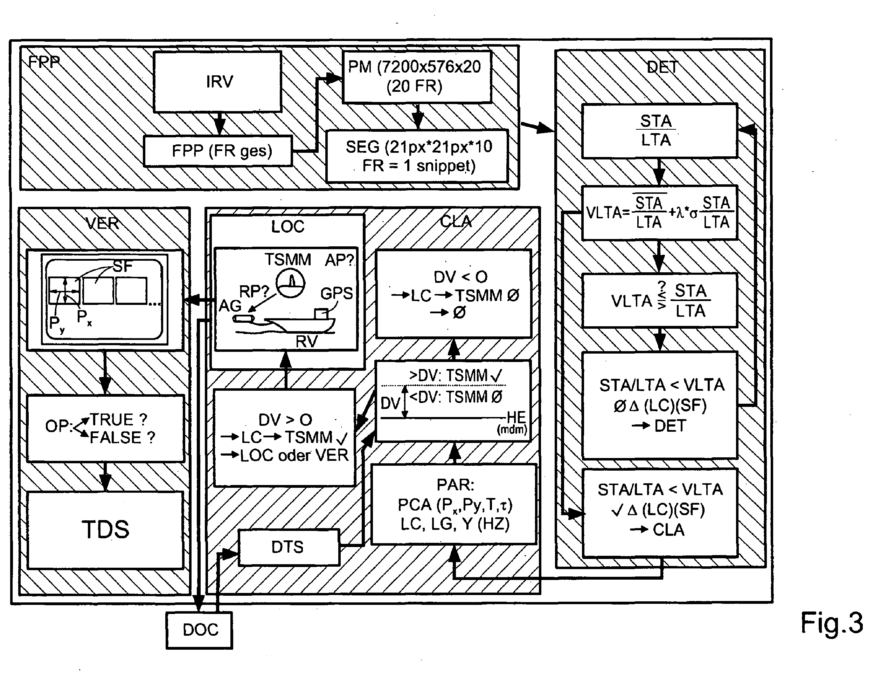

Figur 3    die Aufbaulogik des Verfahrens nach der Erfindung,
Figur 4    die Leistungsfähigkeit von Detektor und Klassifikator anhand eines 10-Tage-Zeitraums,

**Patentansprüche**

1.    Verfahren zur automatisierten Echtzeit-Erfassung von marinen Säugern (MM) in natürlichen Gewässern in der Umgebung eines Schiffs (RV) durch Detektion von thermischen Signaturen der marinen Säuger (TSMM) mittels bildgebendem thermographischem Scannen der Gewässeroberfläche mit einem Infrarotkamerasystem (IRC), das der Erzeugung eines Bilddatenstroms (IRV) von aufeinanderfolgenden Bildern (FR) dient; wobei jedes Bild (FR) in einzelne Pixel aufgeteilt ist, und anschließender modularer Prozessierung (MP) des Bilddatenstroms (IRV) in einem Computer (COM) mit zumindest den aufeinanderfolgenden, in einzelnen Computerkomponenten implementierten Teilprozessen (SP):

• Bildvorverarbeitung (FPP) jedes Bilds (FR),
• Detektion (DET) von lokalen Kontraständerungen im Bild (FR),
• Klassifikation (CLA) der detektierten lokalen Kontraständerungen zur Erkennung der thermischen Signatur eines marinen Säugers (TSMS),

**Dadurch gekennzeichnet, dass**

• in der Bildvorverarbeitung (FPP) der Bilddatenstrom (IRV) in Kacheln (SF) mit bekannter Bildposition segmentiert wird, die über mehrere Bilder (FR) hinweg so genannte "Snippets" bilden,
• in der Detektion (DET) nur Snippets mit einer Überschreitung eines Grenzwerts (VLTA) an die Klassifikation (CLA) weitergereicht werden, wobei für ein Snippet der Grenzwert (VLTA) basierend auf dem Quotienten eines Kurzzeitmittelwertes (STA) zu einem Langzeitmittelwert (LTA) zur Erkennung von lokalen Kontraständerungen in dem Snippet eingesetzt wird,

• in der Klassifikation (CLA) ein überwachtes Lernen mithilfe einer Stützvektormethode (SVM, Support Vector Machine) durch Vorgabe von ausgewählten Trainingsdatensätzen (TDS) und anhand einer Hauptkomponentenanalyse (PCA) ausgewählter relevanter N Hauptkomponenten eines Snippets, eines lokalen Kontrasts innerhalb eines Snippets, eines globalen Kontrasts zwischen einem Snippet und dem gesamten Bild sowie eines Abstands des Snippets vom Horizonat stattfindet, wobei nur Snippets einer Klasse "thermische Signatur eines marinen Säugers (TSMM)" zugeordnet werden.

2. Verfahren nach Anspruch 1,
**dadurch gekennzeichnet, dass**
in der Bildsegmentierung (SEG) ein Snippet die Größe 21 Pixel * 21 Pixel * 10 Bilder (FR) aufweist.

3. Verfahren nach Anspruch 1 oder 2,
**dadurch gekennzeichnet, dass**
in der Detektion (DET) der Grenzwert (VLTA) berechnet wird mit

$$VLTA = \overline{\left(\frac{STA}{LTA}\right)} + \lambda * \sigma\left(\frac{STA}{LTA}\right)$$

mit

STA= Kurzzeitmittelwert
LTA= Langzeitmittelwert
λ= Konstante zwischen 1 und 3 in Abhängigkeit von der Auflösung einer grafischen Benutzeroberfläche (GUI), zur bildlichen Darstellung des prozessierten Bilddatenstroms (IRV), die gleichzeitig der Bedienung des Verfahrens dient,
σ= Standardabweichung über N Messwerte von STA und LTA

und

Querbalken = Mittelwert über N Messwerte von STA und LTA

4. Verfahren nach einem oder mehreren der vorangehenden Ansprüche,
**dadurch gekennzeichnet, dass**
in der Klassifikation (CLA) 30 Trainingsdatensätze (TDS) der Klasse "thermische Signatur eines marinen Säugers (TSMM)" und 30 Trainingsdatensätze (TDS) der Klasse keine thermische Signatur eines marinen Säugers (TSMM)" eingesetzt werden.

5. Verfahren nach einem oder mehreren der vorangehenden Ansprüche,
**dadurch gekennzeichnet, dass**
in einer Lokalisation (LOK) der klassifizierten thermischen Signatur eines marinen Säugers (TSMM) in weitergereichte Snippets Orientierungs- und Entfernungslinien (LS) integriert werden, die in der bildlichen Darstellung auf einer grafischen Benutzeroberfläche (GUI) dargestellt werden.

6. Verfahren nach einem oder mehreren der vorangehenden Ansprüche,
**dadurch gekennzeichnet, dass**
in einer Verifikation (VER) der klassifizierten, lokalisierten thermischen Signatur eines marinen Säugers (TSMM) zumindest zehn Subbilder (SF) aus weitergereichten Snippets gleichzeitig auf einer grafischen Benutzeroberfläche (GUI) bildlich dargestellt werden.

7. Verfahren nach einem oder mehreren der vorangehenden Absprüche,
**dadurch gekennzeichnet, dass**
in einer Verifikation (VER) der klassifizierten, lokalisierten thermischen Signatur eines marinen Säugers (TSMM) in weitergereichten Snippets der Bildbereich mit der detektierten lokalen Kontraständerung mit globalen Positionsdaten vergrößert (ZF) bildlich auf einer grafischen Benutzeroberfläche (GUI) dargestellt wird.

8. Verfahren nach einem oder mehreren der vorangehenden Ansprüche,
**dadurch gekennzeichnet, dass**
in einer Verifikation (VER) der klassifizierten, lokalisierten thermischen Signatur eines marinen Säugers (TSMM) eine manuelle Verifikation (VER) durchgeführt wird.

9. Verfahren nach einem oder mehreren der vorangehenden Ansprüche,
**dadurch gekennzeichnet, dass**
bei der Weiterreichung eines Snippets in eine Verifikation (VER) der klassifizierten, lokalisierten thermischen Signatur eines marinen Säugers (TSMM) eine automatische Alarmierung des Operators erfolgt.

10. Verfahren nach einem oder mehreren der vorangehenden Ansprüche,
**dadurch gekennzeichnet, dass**
in einer Dokumentation (DOC) die klassifizierten, lokalisierten und verifizierten thermischen Signaturen mariner Säuger (TSMM) als Kartenprojektionen dargestellt werden.

11. Verfahren nach einem oder mehreren der vorangehenden Ansprüche, **dadurch gekennzeichnet, dass**
ein weiterer Teilprozess (SP) in die modulare Prozessierung (MP) implementiert ist, der der Einpassung einer globalen sinuidalen Horizontline mittels automatischer oder manuell festgelegter Stützpunkte dient.

12. Verfahren nach einem oder mehreren der vorangehenden Ansprüche,
**dadurch gekennzeichnet, dass**
ein weiterer Teilprozess (SP) in die modulare Prozessierung (MP) implementiert ist, der einer Vorhersage der Schwimmrichtung der marinen Säuger (MM) anhand der raum-zeitlichen Abfolge der Detektionen (DET) und/oder einem Auslösen einer Kollisionswarnung mit dem Schiff (RV) oder zu im Gewässer befindlichen Gerätschaften (AG) in der Umgebung des Schiffs (RV) dient.

13. Verfahren nach einem oder mehreren der vorangehenden Ansprüche,
**dadurch gekennzeichnet, dass**
ein weiterer Teilprozess (SP) in die modulare Prozessierung (MP) implementiert ist, der der automatischen Kompensation von auftretenden Fehlern dient, wobei
als Fehler thermische Einflüsse auf das Infrarotkamerasystem (IRC) beim thermischen Scannen oder Verwaschungen des Horizonts (HZ) durch Korrektur der individuellen Pixelempfindlichkeit kompensiert werden.

14. Verfahren nach einem oder mehreren der vorangehenden Ansprüche,
**dadurch gekennzeichnet, dass**
die modulare Prozessierung (MP) in mehreren parallelen Pfaden aus Computerkomponenten (COM) gleichzeitig durchgeführt wird.

15. Verfahren nach einem oder mehreren der vorangehenden Ansprüche,
**dadurch gekennzeichnet, dass**
das bildgebende thermographische Scannen der Gewässeroberfläche mit dem Infrarotkamerasystem (IRC) mit einer einzelnen Single- oder Dualband-Infrarotkamera in einem Vollkreis oder mit mehreren Single- oder Dualband-Infrarotkameras in je einem Teilkreis mit jeweils einer aktiven gyroskopischen Kompensation von Schiffsbewegungen gegenüber dem Horizont (HZ) durchgeführt wird.

16. Verfahren nach einem oder mehreren der vorangehenden Ansprüche,
**dadurch gekennzeichnet, dass**

mit dem Infrarotkamerasystem (IRC) zumindest drei aufeinanderfolgende graustufige oder farbige Bilder (FR) pro Sekunde erzeugt werden.

17. Verfahren nach einem oder mehreren der vorangehenden Ansprüche,
**dadurch gekennzeichnet, dass**
zusätzlich eine bildgebende Kamera zum Scannen der Gewässeroberfläche im sichtbaren Lichtbereich vorgesehen ist.

**Claims**

1. A method for the automated real-time detection of marine mammals (MM) in natural bodies of water in the vicinity of a ship (RV) by detecting thermal signatures of the marine mammals (TSMM) by means of imaging thermographic scanning of the surface of the body of water using an infrared camera system (IRC), which is used for generating an image data stream (IRV) of successive images (FR), wherein each image (FR) is divided into individual pixels, and subsequent modular processing (MP) of the image data stream (IRV) in a computer (COM) with at least the successive subprocesses (SP) implemented in individual computer components:

   • image pre-processing (FPP) of each image (FR),
   • detection (DET) of local contrast changes in the image (FR),
   • classification (CLA) of the detected local contrast changes for detecting the thermal signature of a marine mammal (TSMS),

   **characterised in that**

   • in the image pre-processing (FPP), the image data stream (IRV) is segmented into tiles (SF) with a known image position, which form so-called "snippets" across a plurality of images (FR),
   • in detection (DET), only snippets exceeding a limit value (VLTA) are forwarded to classification (CLA), wherein for a snippet, the limit value (VLTA) based on the quotient of a short-term average (STA) to a long-term average (LTA) is used for detecting local contrast changes in the snippet,
   • in classification (CLA), monitored learning takes place with the aid of a support vector machine (SVM) by specifying selected training data sets (TDS) and on the basis of a principal component analysis (PCA) of selected relevant N principal components of a snippet, of a local contrast within a snippet, a global contrast between a snippet and the image as a whole and also a distance of the snippet from the horizon, wherein only snippets are assigned to a class "thermal signature of a marine mammal (TSMM)".

2. The method according to Claim 1,
**characterised in that**
in image segmentation (SEG), a snippet has the size 21 pixels * 21 pixels * 10 images (FR).

3. The method according to Claim 1 or 2,
**characterised in that**
in detection (DET), the limit value (VLTA) is calculated using

$$VLTA = \overline{\left(\frac{STA}{LTA}\right)} + \lambda * \sigma\left(\frac{STA}{LTA}\right)$$

where

STA= short-term average
LTA= long-term average
$\lambda$ = constant between 1 and 3 as a function of the resolution of a graphical user interface (GUI), for the graphical representation of the processed image data stream (IRV), which is used at the same time for carrying out the method,
$\sigma$= standard deviation across N measured values of STA and LTA

and
horizontal bar = average across N measured values of STA and LTA.

4. The method according to one or more of the preceding claims,
**characterised in that**
30 training data sets (TDS) of the class "thermal signature of a marine mammal (TSMM)" and 30 training data sets (TDS) of the class "no thermal signature of a marine mammal (TSMM)" are used in the classification (CLA).

5. The method according to one or more of the preceding claims,
**characterised in that**
in a localisation (LOK) of the classified thermal signature of a marine mammal (TSMM), orientation and distance lines (LS) are integrated into forwarded snippets, which are illustrated in the graphical representation on a graphical user interface (GUI).

6. The method according to one or more of the preceding claims,
**characterised in that**
in a verification (VER) of the classified, localised thermal signature of a marine mammal (TSMM), at least ten sub-images (SF) made up of forwarded snippets are depicted simultaneously on a graphical user interface (GUI).

7. The method according to one or more of the preceding claims,
**characterised in that**
in a verification (VER) of the classified, localised thermal signature of a marine mammal (TSMM) in forwarded snippets, the image region with the detected local contrast change is depicted enlarged (ZF) with global positional data on a graphical user interface (GUI).

8. The method according to one or more of the preceding claims,
**characterised in that**
in a verification (VER) of the classified, localised thermal signature of a marine mammal (TSMM), a manual verification (VER) is carried out.

9. The method according to one or more of the preceding claims,
**characterised in that**
during the forwarding of a snippet to a verification (VER) of the classified, localised thermal signature of a marine mammal (TSMM), an automatic alerting of the operator takes place.

10. The method according to one or more of the preceding claims,
**characterised in that**
in a documentation (DOC), the classified, localised and verified thermal signatures of marine mammals (TSMM) are illustrated as map projections.

11. The method according to one or more of the preceding claims,
**characterised in that**
a further subprocess (SP) is implemented in the modular processing (MP), which is used for adjusting a global sinusoidal horizon line by means of automatic or manually-determined support points.

12. The method according to one or more of the preceding claims,
**characterised in that**
a further subprocess (SP) is implemented in the modular processing (MP), which is used for predicting the swimming direction of the marine mammals (MM) on the basis of the spatio-temporal sequence of the detections (DET) and/or triggering of a collision warning with the ship (RV) or equipment (AG) located in the body of water in the vicinity of the ship (RV).

13. The method according to one or more of the preceding claims,

**characterised in that**

a further subprocess (SP) is implemented in the modular processing (MP), which is used for automatically compensating errors that occur, wherein thermal influences on the infrared camera system (IRC) during thermal scanning or washing of the horizon (HZ) are compensated as errors by correction of the individual pixel sensitivity.

14. The method according to one or more of the preceding claims,
**characterised in that**
the modular processing (MP) is carried out in a plurality of parallel paths from computer components (COM) simultaneously.

15. The method according to one or more of the preceding claims,
**characterised in that**
the imaging thermographic scanning of the surface of the body of water is carried out using the infrared camera system (IRC) using an individual single or dual band infrared camera in a full circle or with a plurality of single or dual band infrared cameras, each in a part circle with an active gyroscopic compensation of ship movements with respect to the horizon (HZ) in each case.

16. The method according to one or more of the preceding claims,
**characterised in that**
at least three successive greyscale or colour images (FR) are generated per second using the infrared camera system (IRC)..

17. The method according to one or more of the preceding claims,
**characterised in that**
an imaging camera is additionally provided for scanning the surface of the body of water in the visible light range.

**Revendications**

1. Procédé pour la détection automatisée en temps réel de mammifères marins (MM) dans des eaux naturelles dans l'environnement d'un bateau (RV) par détection de signatures thermiques des mammifères marins (TSMM) au moyen d'un balayage thermographique d'imagerie de la surface des eaux avec un système de caméra infrarouge (IRC) qui sert à la production d'un flux de données d'image (IRV) d'images successives (FR), dans lequel chaque image (FR) est subdivisée en pixels individuels, et par traitement modulaire (MP) qui s'en suit du flux de données d'image (IRV) dans un ordinateur (COM) avec au moins les processus partiels (SP) successifs suivants, implémentés dans des composants informatiques individuels :

- le prétraitement d'images (FPP) de chaque image (FR),
- la détection (DET) de modifications locales de contraste dans l'image (FR),
- la classification (CLA) des modifications locales de contraste détectées pour la reconnaissance de la signature thermique d'un mammifère marin (TSMS),

**caractérisé en ce que**

- lors du prétraitement d'images (FPP), le flux de données d'image (IRV) est segmenté en carreaux (SF) à position d'image connue, lesquels forment des dénommés « snippets » sur plusieurs images (FR),
- lors de la détection (DET), seulement des snippets avec un dépassement par le haut d'une valeur limite (VLTA) étant transférés vers la classification (CLA), dans lequel on utilise, pour un snippet, la valeur limite (VLTA) sur la base du quotient d'une valeur moyenne de courte durée (STA) par une valeur moyenne de longue durée (LTA) pour la reconnaissance de modifications locales de contraste dans le snippet,
- lors de la classification (CLA), un apprentissage surveillé ayant lieu au moyen d'une méthode à vecteurs de support (SVM, Support Vector Machine) par prescription de jeux de données d'entraînement sélectionnés (TDS) et à l'aide d'une analyse en composantes principales (PCA) de N composantes principales pertinentes sélectionnées d'un snippet, d'un contraste local à l'intérieur d'un snippet, d'un contraste global entre un snippet et l'image entière ainsi que d'une distance d'un snippet par rapport à l'horizon, dans lequel seulement des snippets d'une classe « signature thermique d'un mammifère marin (TSMM) » sont attribués.

2. Procédé selon la revendication 1,
**caractérisé en ce que**,
dans la segmentation d'image (SEG), un snippet présente la taille de 21 pixels * 21 pixels * 10 images (FR).

3. Procédé selon la revendication 1 ou 2,
**caractérisé en ce que**,
lors de la détection (DET), on calcule la valeur limite (VLTA) avec

$$VLTA = \overline{\left(\frac{STA}{LTA}\right)} + \lambda * \sigma\left(\frac{STA}{LTA}\right)$$

avec

STA = valeur moyenne de courte durée
LTA = valeur moyenne de longue durée
λ = constante entre 1 et 3 en fonction de la résolution d'une interface utilisateur graphique (GUI) pour la représentation imagée du flux de données traité (IRV), laquelle sert en même temps à la conduite du procédé,
σ = écart standard sur N valeurs de mesure de STA et LTA

et

barre transversale = valeur moyenne sur N valeurs de mesure de STA et LTA.

4. Procédé selon l'une ou plusieurs des revendications précédentes,
   **caractérisé en ce que**
   lors de la classification (CLA), on utilise 30 jeux de données d'entraînement (TDS) de la classe « signature thermique d'un mammifère marin (TSMM) » et 30 jeux de données d'entraînement (TDS) de la classe « pas de signature thermique d'un mammifère marin (TSMM) ».

5. Procédé selon l'une ou plusieurs des revendications précédentes,
   **caractérisé en ce que**
   lors d'une localisation (LOK) de la signature thermique classifiée d'un mammifère marin (TSMM), des lignes d'orientation et de distance (LS) sont intégrées dans des snippets transférés, lesquelles sont représentées sur la représentation imagée au niveau d'une interface utilisateur graphique (GUI).

6. Procédé selon l'une ou plusieurs des revendications précédentes,
   **caractérisé en ce que**
   lors d'une vérification (VER) de la signature thermique classifiée, localisée, d'un mammifère marin (TSMM), au moins dix sous-images (SF) de snippets transférés sont représentées simultanément, en image, sur une interface utilisateur graphique (GUI).

7. Procédé selon l'une ou plusieurs des revendications précédentes,
   **caractérisé en ce que**
   lors d'une vérification (VER) de la signature thermique classifiée, localisée d'un mammifère marin (TSMM), dans des snippets transférés, la zone d'image avec la modification locale de contraste détectée est représentée en image avec des données de position globales de manière agrandie (ZF) sur une interface utilisateur graphique (GUI).

8. Procédé selon l'une ou plusieurs des revendications précédentes,
   **caractérisé en ce que**
   dans une vérification de la signature thermique classifiée, localisée, d'un mammifère marin (TSMM), on effectue une vérification manuelle (VER).

9. Procédé selon l'une ou plusieurs des revendications précédentes,
   **caractérisé en ce que**
   lors du transfert d'un snippet vers une vérification (VER) de la signature thermique classifiée, localisée, d'un mammifère marin (TSMM), il s'en suit un avertissement automatique de l'opérateur.

10. Procédé selon l'une ou plusieurs des revendications précédentes,
    **caractérisé en ce que**
    lors d'une documentation (DOC), les signatures thermiques classifiées, localisées et vérifiées de mammifères marins (TSMM) sont représentées en tant que projections cartographiques.

11. Procédé selon l'une ou plusieurs des revendications précédentes,
    **caractérisé en ce que**
    un autre processus partiel (SP) est implémenté dans le traitement modulaire (MP), lequel sert à la mise en place d'une ligne d'horizon sinusoïdale globale au moyen de points de contrôle déterminés automatiquement ou manuellement.

12. Procédé selon l'une ou plusieurs des revendications précédentes,
    **caractérisé en ce que**
    un autre processus partiel (SP) est implémenté dans le traitement modulaire (MP), lequel sert à une prédiction de la direction de nage des mammifères marins (MM) à l'aide de la succession spatio-temporelle des détections (DET) et/ou d'un déclenchement d'un avertissement de collision avec le bateau (RV) ou avec des équipements (AG) se trouvant dans les eaux aux alentours du bateau (RV).

13. Procédé selon l'une ou plusieurs des revendications précédentes,
    **caractérisé en ce que**
    un autre processus partiel (SP) est implémenté dans le traitement modulaire (MP), lequel sert à la compensation automatique d'erreurs apparaissant, dans lequel on compense, en tant qu'erreurs, des influences thermiques sur le système de caméra infrarouge (IRC) lors du balayage thermique ou des dilutions de l'horizon (HZ) par correction de la sensibilité individuelle de pixel.

**14.** Procédé selon l'une ou plusieurs des revendications précédentes,
**caractérisé en ce que**
le traitement modulaire (MP) est exécuté simultanément en plusieurs chemins parallèles à partir de composants informatiques (COM).

**15.** Procédé selon l'une ou plusieurs des revendications précédentes,
**caractérisé en ce que**
le balayage thermographique d'imagerie de la surface des eaux avec le système de caméra infrarouge (IRC) est exécuté avec une caméra infrarouge individuelle à bande unique ou double bande selon un cercle complet ou avec plusieurs caméras infrarouges individuelles à bande unique ou double bande selon respectivement un cercle partiel avec respectivement une compensation gyroscopique active de mouvements de bateau par rapport à l'horizon (HZ).

**16.** Procédé selon l'une ou plusieurs des revendications précédentes,
**caractérisé en ce que**
avec le système de caméra infrarouge (IRC), on génère au moins trois images successives à niveaux de gris ou en couleurs (FR) par seconde.

**17.** Procédé selon l'une ou plusieurs des revendications précédentes,
**caractérisé en ce que**
l'on prévoit de manière additionnelle une caméra d'imagerie pour le balayage de la surface des eaux dans la plage de lumière visible.

Fig.1

EP 2 758 915 B1

Fig.2

Fig.3

Data: 20.1.2011 - 30.1.2011

DET (STA/LTA) → CLA (TDS : 30 TRUE 30 FALSE)

FALSE pos.: 55

FALSE pos.: 38

8.975.952.000 SF ?

1093 LC → CLA

93 TSMM → VER

FALSE neg.: 2

| Alert / h | |
|---|---|
| CLA | CLA ✓ |
| 4.38 (20 in 4h) | 0.23 (1 in 4h) |

Klassifikationsprüfdaten

Klasse / Muster #

ROC-Kurve aus AUC=0,99425

Wahr-positiv-Rate / Falsch-positiv-Rate

Klassifikationsqualität

Entscheidungswert / Muster #

Fig.4

Fig.5

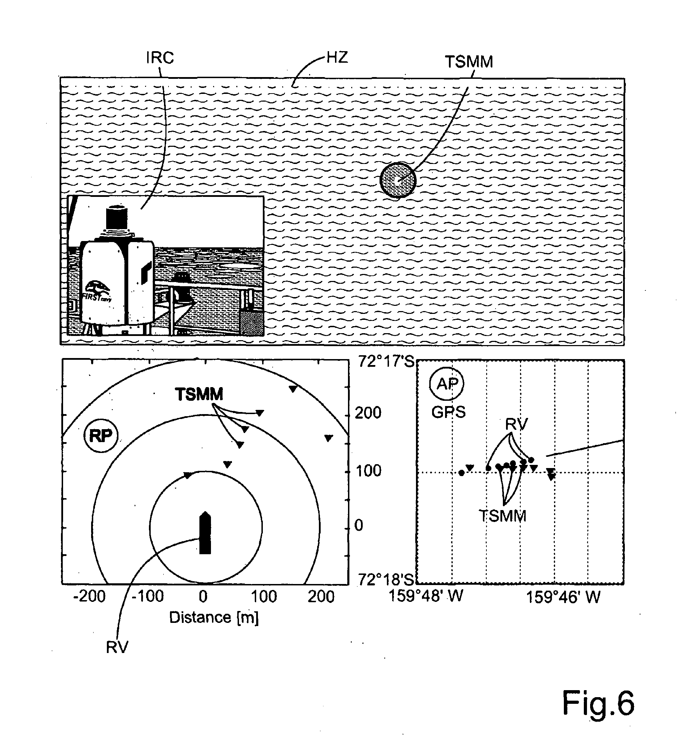

Fig.6

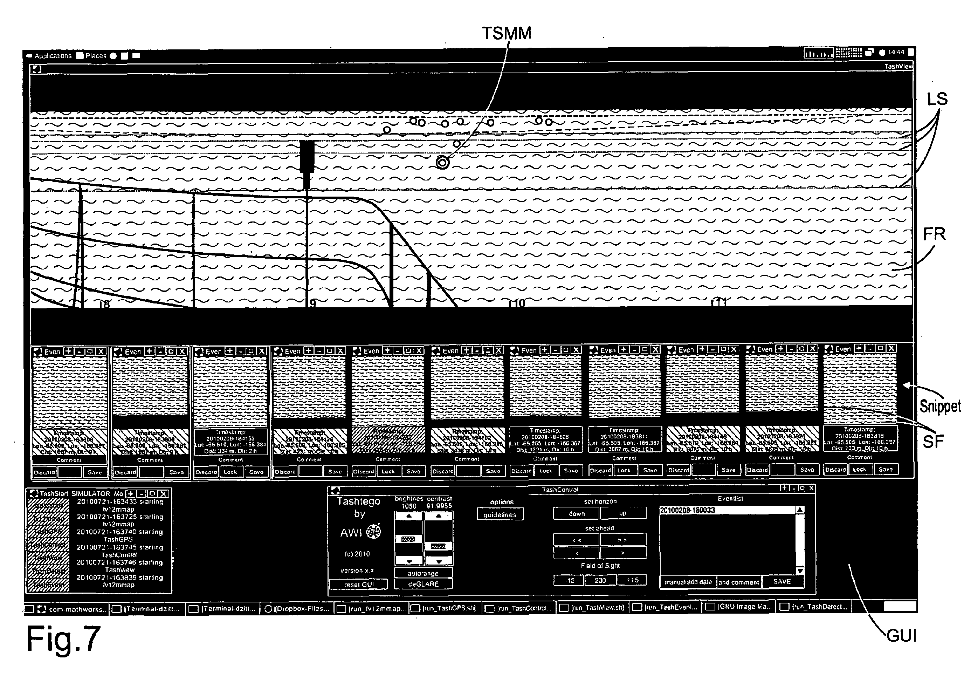

Fig.7

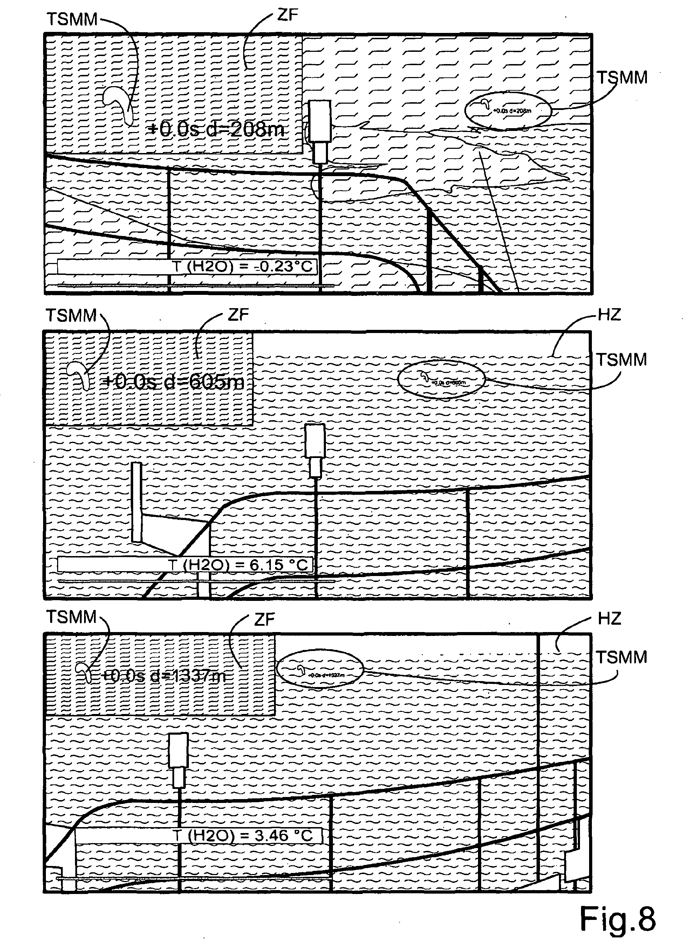

Fig.8

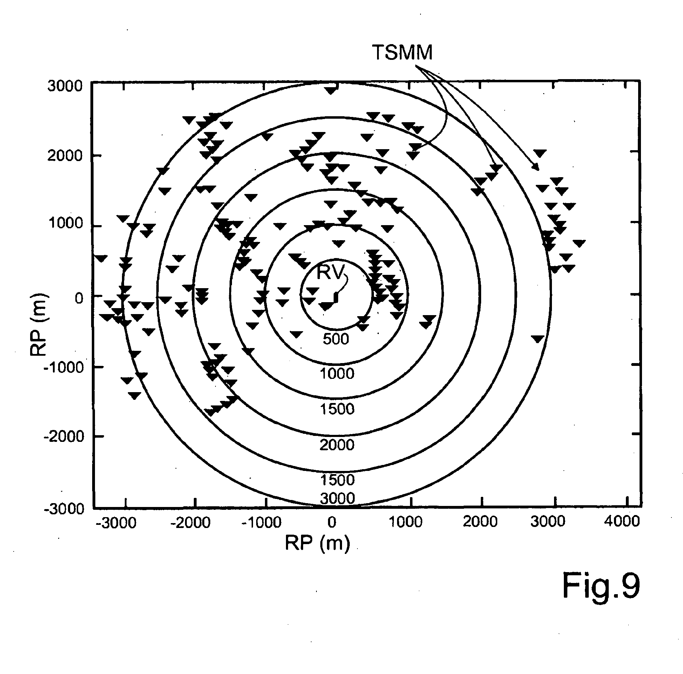

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100046326 A1

**In der Beschreibung aufgeführte Nicht-Patentliteratur**

- **J. WONG et al.** Automatic time-picking of first arrivals on noisy microseismic data. *Conference Abstract Canadian Society of Exploration Geophysicists CSEG Microseismic Workshop 2009*
- **I. R. RODRIGUEZ.** *Automatic time-picking of Microseismic Data Combining STA/LTA and the Stationary Discrete Wavelet Transform,* 2011
- **MARC RITTER.** Entwurf eine Echtzeit-Bildverarbeitungssystem zur automatischen Erkennung von Walen im Umfeld der Antarktis. Technische Universität Chemnitz, 19. Marz 2007
- **MARC RITTER.** *15 Jahre Künstliche Intelligenz an der TU Chemnitz,* April 2008, 231-250
- **D.P. ZITTERBART et al.** MAPS: an Automated Whale Detection System for Mitigation Purposes. *SEG (Society of Exploration Geophysicists) Expanded Abstracts,* 2011, vol. 30, 67
- *International Exhibition and 81st Annual Meeting,* 23. September 2011, vol. 18
- *Erstveröffentlichung im Internet,* 01. August 2011
- **KEITH DARTEZ.** *Infrared whale counting,* 21. April 2009